# EUROPEAN PATENT APPLICATION

(11) **EP 2 717 260 A1**
(43) Date of publication of application: **09.04.2014**
(21) Application number: 12793967.6
(22) Date of filing: 04.06.2012
(51) Int. Cl.: G10L 19/00, H04L 1/00

(54) **AUDIO CODING METHOD AND APPARATUS, AUDIO DECODING METHOD AND APPARATUS, CODING/DECODING SYSTEM**

(30) Priority: 02.06.2011 CN 201110147298
(71) Applicant: Huawei Device Co., Ltd., Shenzhen, Guangdong 518129 (CN)
(72) Inventor: ZHAO, Yunxuan, Shenzhen Guangdong 518129 (CN); ZHANG, Jinliang, Shenzhen Guangdong 518129 (CN)
(74) Representative: Isarpatent
(86) International application number: PCT/CN2012/076428
(87) International publication number: WO 2012/163303

(57) **Abstract**

Embodiments of the present invention disclose an audio encoding method and apparatus, an audio decoding method and apparatus, and an encoding/decoding system, which can improve anti-packet-loss performance in an audio data transmission process. The method in embodiments of the present invention is applicable to an audio encoding/decoding system including at least two channels. The method includes: obtaining audio data of N channels; and performing channel interleaving and packetization on the obtained audio data of the N channels to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames. Embodiments of the present invention also provide an audio decoding method, a relevant apparatus, and an encoding/decoding system. Embodiments of the present invention can effectively improve the anti-packet-loss performance in an audio data transmission process.

## Description

This application claims priority to Chinese Patent Application No. 201110147298.5, filed with the Chinese Patent Office on June 2, 2011 and entitled "AUDIO ENCODING METHOD AND APPARATUS, AUDIO DECODING METHOD AND APPARATUS, AND ENCODING/DECODING SYSTEM", which is incorporated herein by reference in its entirety.

### TECHNICAL FIELD

The present invention relates to the field of data processing, and in particular, to an audio encoding method and apparatus, an audio decoding method and apparatus, and an encoding/decoding system.

### BACKGROUND

A video conferencing technology implements long-distance transmission of information integrating voice, image, data, and the like, so that people may hear the voice of a remote party during remote communication by using the video conferencing technology and may also see motion pictures and slide content of the remote party, which greatly enhances intimacy and on-the-spot experience in remote communication.

A video conferencing system generally includes a multipoint control unit (MCU, Multipoint Control Unit) and a plurality of terminals. In a video conference, each terminal corresponds to a site, collects voices and images of each site and encodes and sends the collected voices and images to the MCU. The MCU processes the voices and images in a certain manner (voice mixing, image forwarding, or multi-picture composition), and sends the processed voices and images to each terminal, and the terminal decodes and outputs the voices and images of a remote site, thereby achieving the objective of remote communication.

A conventional video conferencing system generally uses a user datagram protocol (UDP, User Datagram Protocol) to transmit audio and image data. Because UDP provides a simple and unreliable transaction-oriented information transfer service, packet loss is unavoidable in the process of transmitting audio and image data.

For ease of understanding, the following briefly describes some parameters used in an audio encoding/decoding process.

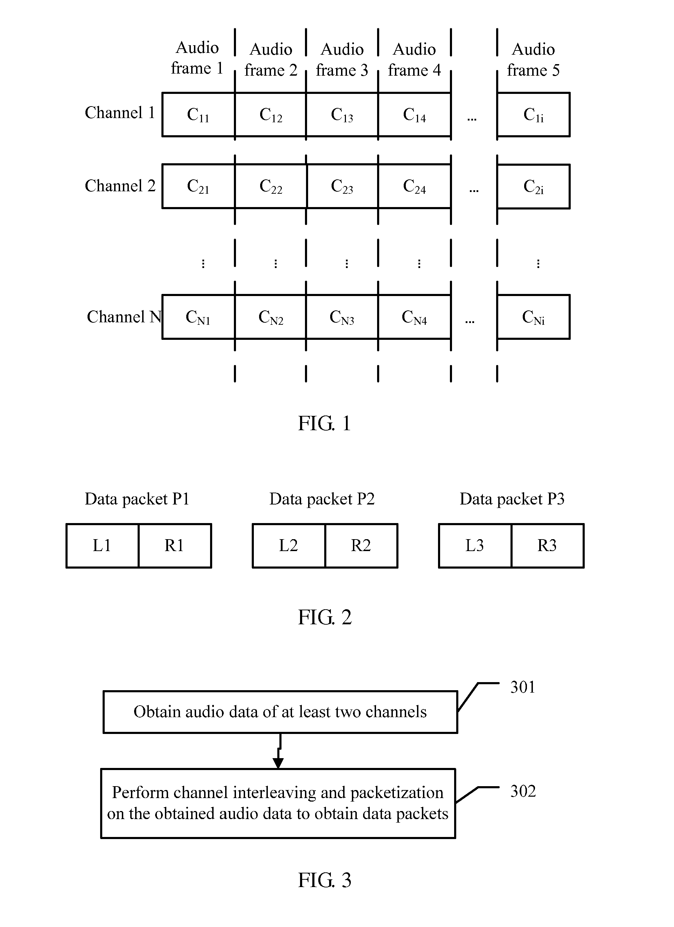

Reference may be made to FIG. 1, which shows audio data streams of N channels. Audio data of N channels in a unit length and of the same time (for example, C1i, C2i, ..., CNi) may be regarded as an audio frame, for example, audio frame 1, audio frame 2, ..., audio frame i shown in FIG. 1, where i is the sequence number of an audio frame and its value depends on the duration of the audio data.

For ease of subsequent description, audio data of a unit length may be referred to as a segment of audio data, and the unit length may be determined according to an actual application environment. The unit length also indicates the length of an audio frame, for example, 5 ms or 10 ms. Each audio frame may be regarded as a set formed by audio data of the same time but of different channels.

In the prior art, when an encoding terminal performs audio encoding for at least two channels, audio data of different channels in a same audio frame is encoded into one data packet, for example, in 2-channel audio encoding, the encoding terminal encodes left-channel audio data L1 in a first audio frame and right-channel audio data R1 in the first audio frame into data packet P1, and similarly, encodes L2 and R2 into data packet P2, and encodes L3 and R3 into data packet P3, and so on. The specific packetization manner of data packets may be as shown in FIG. 2. Assuming that packet loss occurs when these data packets are sent to a decoding terminal, the decoding terminal uses normally received data packets to recover lost data packets. For example, if data packet P2 is lost, but the decoding terminal normally receives data packet P1 and data packet P3, the decoding terminal uses audio data in data packet P1 and audio data in data packet P3 to recover data packet P2.

The above is a packetization manner of one frame per packet. The prior art may also use a packetization manner of multiple frames per packet. When the packetization manner of multiple frames per packet is used, each data packet includes multiple audio frames, and all audio data of these audio frames is encoded into a same data packet, for example, L1, R1, L2, and R2 are encoded into data packet P1, while L3, R3, L4, and R4 are encoded into data packet P2.

In the solution of the prior art, each data packet corresponds to one or more audio frames, and all audio data of these audio frames is encoded into a same data packet. That is, If one data packet is lost, audio data of all channels in all the corresponding audio frames is lost. If audio data changes greatly in different audio frames, a good effect may be hardly achieved when the decoding terminal uses adjacent audio frames to recover the audio data, and consequently, anti-packet-loss performance in an audio data transmission process is reduced.

### SUMMARY

Embodiments of the present invention provide an audio encoding method and apparatus, an audio decoding method and apparatus, and an encoding/decoding system, which may improve anti-packet-loss performance in an audio data transmission process.

An audio encoding method provided by an embodiment of the present invention is applicable to an audio encoding system including N channels, where N is an integer greater than or equal to 2. The method includes:
obtaining audio data of the N channels; and performing channel interleaving and packetization on the obtained audio data of the N channels to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames.

An audio decoding method provided by an embodiment of the present invention is applicable to an audio encoding/decoding system including N channels, where N is an integer greater than or equal to 2. The method includes:
receiving data packets; when loss of a data packet is detected, querying for a lost audio frame corresponding to the lost data packet, where the lost audio frame is an audio frame that has lost a part of audio data; determining whether the received data packets include the remaining audio data of the lost audio frame; and if so, using the remaining audio data of the lost audio frame to recover the audio data of the lost audio frame; or if not, continuing to receive data packets, and when the remaining audio data of the lost audio frame is obtained, using the remaining audio data of the lost audio frame to recover the audio data of the lost audio frame. An audio encoding apparatus provided by an embodiment of the present invention is used for encoding audio data of N channels, where N is an integer greater than or equal to 2. The audio encoding apparatus includes:
an obtaining unit, configured to obtain audio data of the N channels; and an interleaving and packetizing unit, configured to perform channel interleaving and packetization on the audio data of the N channels obtained by the obtaining unit to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames.

An audio decoding apparatus provided by an embodiment of the present invention is used for decoding audio data of N channels, where N is an integer greater than or equal to 2. The audio decoding apparatus includes:
a receiving unit, configured to receive data packets; a querying unit, configured to: when loss of a data packet is detected, query for a lost audio frame corresponding to the lost data packet, where the lost audio frame is an audio frame that has lost a part of audio data; a judging unit, configured to: determine whether the data packets received by the receiving unit include the remaining audio data of the lost audio frame which the querying unit queries for, and if so, trigger a recovering unit to perform a corresponding operation, or if not, trigger a processing unit to perform a corresponding operation; the recovering unit, configured to use, according to the trigger of the judging unit, the remaining audio data of the lost audio frame to recover the audio data of the lost audio frame; and the processing unit, configured to trigger, according to the trigger of the judging unit, the receiving unit to continue to receive data packets, and when the remaining audio data of the lost audio frame is obtained, trigger the recovering unit to perform a corresponding operation.

An encoding/decoding system provided by an embodiment of the present invention includes N channels, where N is an integer greater than or equal to 2. The encoding/decoding system includes:
an audio encoding apparatus, configured to: obtain audio data of the N channels; perform channel interleaving and packetization on the obtained audio data of the N channels to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames; and send the data packets; and an audio decoding apparatus, configured to: receive data packets; when a data packet is lost, query for a lost audio frame corresponding to the lost data packet, where the lost audio frame is an audio frame that has lost a part of audio data; determine whether the received data packets include the remaining audio data of the lost audio frame; and if so, use the remaining audio data of the lost audio frame to recover the audio data of the lost audio frame; or if not, continue to receive data packets, and when the remaining audio data of the lost audio frame is obtained, use the remaining audio data of the lost audio frame to recover the audio data of the lost audio frame.

As seen from the above technical solutions, the embodiments of the present invention have the following advantages:
In the embodiments of the present invention, the data packet obtained by the audio encoding apparatus by packetization includes X*N segments of audio data. Because in the X*N segments of audio data, at least X+1 segments of audio data belong to different audio frames, if one data packet is lost in a data packet transmission process, audio data of at least two audio frames in the data packet is not completely lost. Even if the audio data changes greatly in different audio frames, the audio decoding apparatus may recover audio data according to the remaining audio data in the lost audio frame. Because strong correlation exists between audio data in a same audio frame, a good effect may be achieved when the audio decoding apparatus recovers the audio data, and thereby the anti-packet-loss performance in the audio data transmission process is improved.

### BRIEF DESCRIPTION OF DRAWINGS

FIG. 1 is a schematic diagram of division of audio data in the prior art;
FIG. 2 is a schematic diagram of packetization of data packets in the prior art;
FIG. 3 is a schematic diagram of an embodiment of an audio encoding method according to the present invention;
FIG. 4 is a schematic diagram of another embodiment of an audio encoding method according to the present invention;
FIG. 5 is a schematic diagram of another embodiment of an audio encoding method according to the present invention;
FIG. 6 is a schematic diagram of a packetization manner of data packets in a 2-channel system according to the present invention;
FIG. 7 is a schematic diagram of a packetization manner of data packets in a 3-channel system according to the present invention;
FIG. 8 is a schematic diagram of another packetization manner of data packets in a 2-channel system according to the present invention;
FIG. 9 is a schematic diagram of still another packetization manner of data packets in a 2-channel system according to the present invention;
FIG. 10 is a schematic diagram of another packetization manner of data packets in a 3-channel system according to the present invention;
FIG. 11 is a schematic diagram of an embodiment of an audio decoding method according to the present invention;
FIG. 12 (a) is a schematic diagram of channel interleaving and packetization manner 1 according to the present invention;
FIG. 12 (b) is a schematic diagram after decoding of channel interleaving and packetization manner 1 according to the present invention;
FIG. 13 (a) is a schematic diagram of channel interleaving and packetization manner 2 according to the present invention;
FIG. 13 (b) is a schematic diagram after decoding of channel interleaving and packetization manner 2 according to the present invention;
FIG. 14 (a) is a schematic diagram of channel interleaving and packetization manner 3 according to the present invention;
FIG. 14 (b) is a schematic diagram after decoding of channel interleaving and packetization manner 3 according to the present invention;
FIG. 15 (a) is a schematic diagram of channel interleaving and packetization manner 4 according to the present invention;
FIG. 15 (b) is a schematic diagram after decoding of channel interleaving and packetization manner 4 according to the present invention;
FIG. 16 (a) is a schematic diagram of channel interleaving and packetization manner 5 according to the present invention;
FIG. 16 (b) is a schematic diagram after decoding of channel interleaving and packetization manner 5 according to the present invention;
FIG. 17 (a) is a schematic diagram of channel interleaving and packetization manner 6 according to the present invention;
FIG. 17 (b) is a schematic diagram after decoding of channel interleaving and packetization manner 6 according to the present invention;
FIG. 18 is a schematic diagram of an embodiment of an audio encoding apparatus according to the present invention;
FIG. 19 is a schematic diagram of an embodiment of an audio decoding apparatus according to the present invention; and
FIG. 20 is a schematic diagram of an encoding/decoding system according to the present invention.

### DESCRIPTION OF EMBODIMENTS

Embodiments of the present invention provide an audio encoding method and apparatus, an audio decoding method and apparatus, and an encoding/decoding system, which can improve anti-packet-loss performance in an audio data transmission process.

As shown in FIG. 3, an embodiment of an audio encoding method according to the present invention includes:
301. Obtain audio data of at least two channels.

In this embodiment, before performing audio encoding, an audio encoding apparatus may obtain audio data of at least two channels from a collecting device or other audio devices.

It should be noted that the audio encoding apparatus is applicable to an audio encoding/decoding system, where the audio encoding/decoding system includes N channels, where N is an integer greater than or equal to 2. The audio encoding apparatus may be implemented by an independent device, or may be integrated, as a module, into other terminal devices.

Audio data of each channel in the audio data of the N channels is divided into different audio frames according to a time sequence. Each audio frame has a fixed length, and each audio frame includes N segments of audio data, where each segment of audio data corresponds to one channel.

For example, for a 3-channel system, each audio frame includes three segments of audio data, and the three segments of audio data correspond to one segment of audio signals of the left channel, the middle channel, and the right channel, respectively.

302. Perform channel interleaving and packetization on the obtained audio data to obtain data packets.

After obtaining the audio data of the N channels, the audio encoding apparatus may perform channel interleaving and packetization on the obtained audio data of the N channels to obtain data packets. Each data packet includes X*N segments of audio data. In the X*N segments of audio data, at least X+1 segments of audio data belong to different audio frames.

X is a ratio of an amount of audio data included in one data packet to an amount of audio data included in one audio frame, and X is an integer greater than or equal to 1. For example, if each data packet includes two segments of audio data, and each audio frame includes two segments of audio data, X is equal to 1; if each data packet includes four audio frames, and each audio frame includes two segments of audio data, X is equal to 2, and so on, which is not limited here.

In this embodiment, after data packets are obtained by packetization, to further improve anti-packet-loss performance in the audio data transmission process, the audio encoding apparatus may further perform a pairwise exclusive-OR operation on audio data in at least two data packets to obtain a redundancy packet.

It should be noted that if the audio encoding apparatus performs a pairwise exclusive-OR operation on audio data in at least two data packets to obtain a redundancy packet, the redundancy packet may be transmitted after the two data packets, or may also be transmitted after all data packets, which is not limited here.

Each audio frame includes N segments of audio data. Each data packet includes X*N segments of audio data, and in the X*N segments of audio data included in each data packet, at least X+1 segments of audio data belong to different audio frames. For example, when X is equal to 1, each data packet includes N segments of audio data, and in the N segments of audio data, at least two segments of audio data belong to different audio frames; when X is equal to 2, each data packet includes 2N segments of audio data, and in the 2N segments of audio data, at least three segments of audio data belong to different audio frames.

As seen from the above example, the data packet obtained by the audio encoding apparatus by packetization includes X*N segments of audio data. Because in the X*N segments of audio data, at least X+1 segments of audio data belong to different audio frames, if one data packet is lost in a data packet transmission process, audio data of at least two audio frames in the data packet is not completely lost. Even if the audio data changes greatly in different audio frames, the audio decoding apparatus may recover audio data according to the remaining audio data in the lost audio frame. Because strong correlation exists between audio data in a same audio frame, a good effect may be achieved when the audio decoding apparatus recovers the audio data, and thereby the anti-packet-loss performance in the audio data transmission process is improved.

In the embodiment of the present invention, multiple manners may be used to implement channel interleaving and packetization. With the increase of channels, audio data included in one data packet also increases. In the audio data, only X+1 segments of audio data may belong to different audio frames, while other audio data may belong to a same audio frame; or the audio data may belong to different audio frames respectively, that is, any two segments of audio data in each data packet belong to different audio frames.

It is understandable that, as known from the two manners described above, in X*N segments of audio data included in one data packet, X+1 to X*N segments of audio data may belong to different audio frames, respectively. For ease of description, assuming X is equal to 1, the following uses some specific examples for description:

### (1) Only two segments of audio data belong to different audio frames:

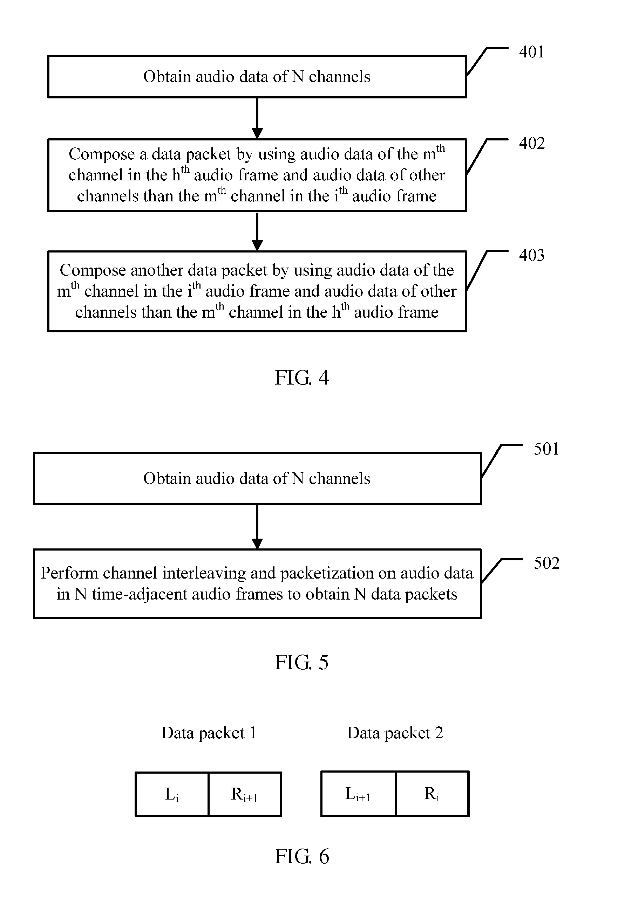

As shown in FIG. 4, another embodiment of an audio encoding method according to the present invention includes:
401. Obtain audio data of N channels.

Step 401 in this embodiment is similar to the content described in step 301 in the embodiment shown in FIG. 3, and is not further described here.

402. Compose a data packet by using audio data of the mth channel in the hth audio frame and audio data of other channels than the mth channel in the ith audio frame.

In this embodiment, the number of channels is N. The audio encoding apparatus may compose a data packet by using audio data of the mth channel in the hth audio frame and audio data of other N-m channels than the mth channel in the ith audio frame.

The data packet obtained by the audio encoding apparatus includes N segments of audio data, where one segment of audio data is audio data of the mth channel in the hth audio frame, and the remaining audio data is audio data in the ith audio frame. Therefore, in the data packet, two segments of audio data belong to different audio frames.

403. Compose another data packet by using audio data of the mth channel in the ith audio frame and audio data of other channels than the mth channel in the hth audio frame.

In this embodiment, the number of channels is N. The audio encoding apparatus may compose a data packet by using audio data of the mth channel in the ith audio frame and audio data of other N-m channels than the mth channel in the hth audio frame.

The data packet obtained by the audio encoding apparatus includes N segments of audio data, where one segment of audio data is audio data of the mth channel in the ith audio frame, and the remaining audio data is audio data in the hth audio frame. Therefore, in the data packet, two segments of audio data belong to different audio frames.

It should be noted that step 402 and step 403 in this embodiment may be executed in any sequence. Step 402 may be first executed and then step 403 is executed, or step 402 and step 403 may be executed simultaneously, which is not limited here.

The hth audio frame and the ith audio frame in this embodiment may be time-adjacent audio frames, or may not be time-adjacent audio frames, which is not limited here.

When the hth audio frame and the ith audio frame are time-adjacent audio frames, the packetization manner in this embodiment may cause that the span of audio frames included in adjacent data packets is small, so that the decoding delay during audio decoding may be effectively reduced.

Here only two audio frames are used as examples for description. It is understandable that in the actual application, there may be more audio frames.

### (2) Any two segments of audio data belong to different audio frames:

As shown in FIG. 5, another embodiment of an audio encoding method according to the present invention includes:
501. Obtain audio data of N channels.

Step 501 in this embodiment is similar to the content described in step 301 in the embodiment shown in FIG. 3, and is not further described here.

502. Perform channel interleaving and packetization on audio data in N time-adjacent audio frames to obtain N data packets.

In this embodiment, the number of channels is N. The audio encoding apparatus may perform channel interleaving and packetization on audio data in N time-adjacent audio frames, so that each data packet obtained by packetization includes N segments of audio data, and that in the N segments of audio data, any two segments of audio data belong to different audio frames.

In the actual application, the audio encoding apparatus may use an alternate packetization manner, for example, first determine the number N of channels, and then for each audio frame, packetize the N segments of audio data in the audio frame into N data packets, respectively. Therefore, the audio data in the N audio frames may be just placed in the N data packets. Thereby, in N segments of audio data of each data packet, any two segments of audio data belong to different audio frames.

For ease of understanding, the following uses two specific instances for brief description.

For a 2-channel system, as shown in FIG. 6:
the audio decoding apparatus may compose a data packet by using audio data Li of the left channel in the i^{th} audio frame and audio data Ri+1 of the right channel in the (i+1)^{th} audio frame; and
compose another data packet by using audio data Li+1 of the left channel in the (i+1)^{th} audio frame and audio data Ri of the right channel in the i^{th} audio frame.

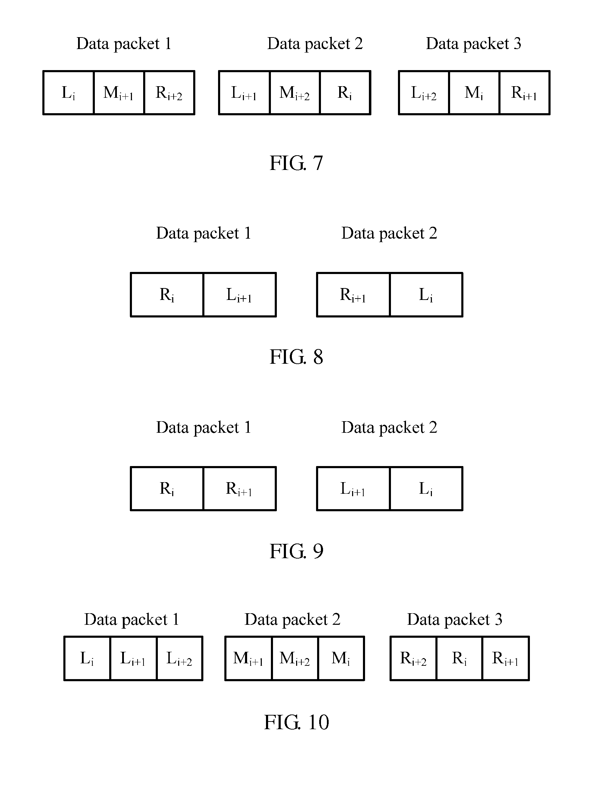

For a 3-channel system, as shown in FIG. 7:
the audio encoding apparatus may compose a data packet by using audio data Li of the left channel in the i^{th} audio frame, audio data Mᵢ₊₁ of the middle channel in the (k+1)^{th} audio frame, and audio data Rᵢ₊₂ of the right channel in the (i+2)^{th} audio frame;
compose another data packet by using audio data Lᵢ₊₁ of the left channel in the (i+1)^{th} audio frame, audio data Mᵢ₊₂ of the middle channel in the (i+2)^{th} audio frame, and audio data Rᵢ of the right channel in the i^{th} audio frame; and
compose still another data packet by using audio data Lᵢ₊₂ of the left channel in the (i+2)^{th} audio frame, audio data Mᵢ of the middle channel in the i^{th} audio frame, and audio data Rᵢ₊₁ of the right channel in the i+1^{th} audio frame.

The manner of arrangement and combination in the above example is a case in this embodiment. In the actual application, other manners of arrangement and combination may be used for implementation, for example:
For a 2-channel system, as shown in FIG. 8 and FIG. 9:
   the audio encoding apparatus may compose a data packet by using audio data Ri of the right channel in the i^{th} audio frame and audio data Li+1 of the left channel in the (i+1)^{th} audio frame; and
   compose another data packet by using audio data Ri+1 of the right channel in the (i+1)^{th} audio frame and audio data Li of the left channel in the i^{th} audio frame.

Alternatively, the audio encoding apparatus may compose a data packet by using audio data Ri of the right channel in the ith audio frame and audio data Ri+1 of the right channel in the (i+1)th audio frame; and
compose another data packet by using audio data Li+1 of the left channel in the (i+1)^{th} audio frame and audio data Li of the left channel in the i^{th} audio frame.

For a 3-channel system, as shown in FIG. 10:
the audio encoding apparatus may compose a data packet by using audio data Li of the left channel in the i^{th} audio frame, audio data Lᵢ₊₁ of the left channel in the (i+1)^{th} audio frame, and audio data Lᵢ₊₂ of the left channel in the (i+2)^{th} audio frame;
compose another data packet by using audio data Mᵢ₊₁ of the middle channel in the (i+1)^{th} audio frame, audio data Mᵢ₊₂ of the middle channel in the (i+2)^{th} audio frame, and audio data Mᵢ of the middle channel in the i^{th} audio frame; and
compose still another data packet by using audio data Rᵢ₊₂ of the right channel in the (i+2)^{th} audio frame, audio data Rᵢ of the right channel in the i^{th} audio frame, and audio data Rᵢ₊₁ of the right channel in the i+1^{th} audio frame.

In the actual application, in addition to the 2-channel system and the 3-channel system, there are systems having more channels. The specific processing manner is similar to the method described above, and is not further described here.

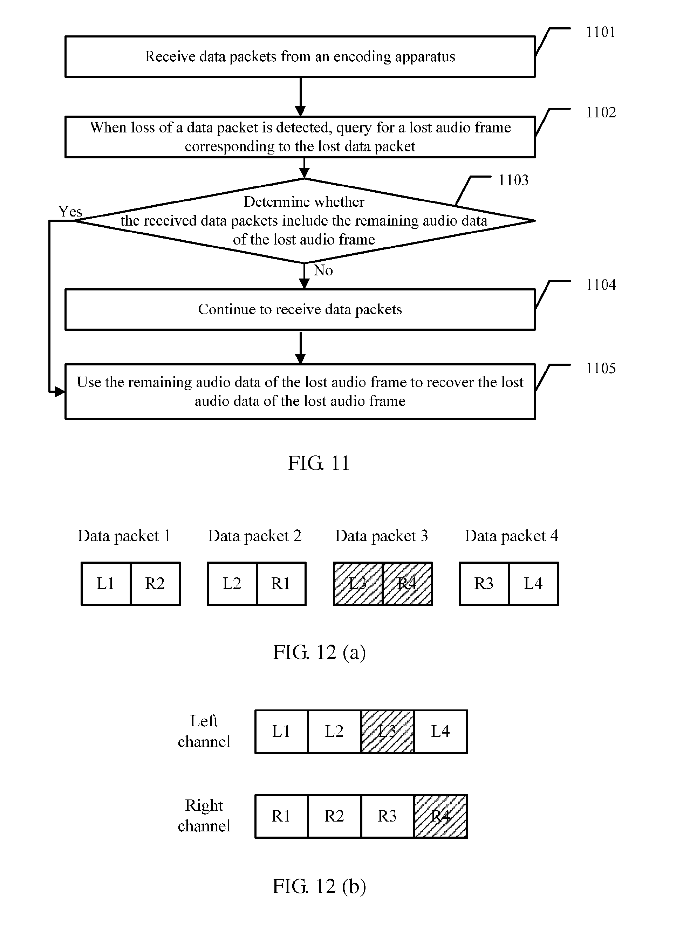

The above describes the audio encoding method according to the present invention. The following describes the audio decoding method according to the present invention. As shown in FIG. 11, an embodiment of the audio decoding method according to the present invention includes:
1101. Receive data packets from an audio encoding apparatus.

After the audio encoding apparatus completes encoding, data packets are sent to an audio decoding apparatus.

A sending process may be: the audio encoding apparatus directly sends the data packets to the audio decoding apparatus, or the audio encoding apparatus sends the data packets to a forwarding device, and then the forwarding device sends the data packets to the audio decoding apparatus.

1102. When loss of a data packet is detected, query for a lost audio frame corresponding to the lost data packet.

Because data packets are usually sent through UDP, and UDP provides a simple and unreliable transaction-oriented information transfer service, packet loss is unavoidable in a transmission process.

Each data packet has a unique corresponding identifier, for example, the first data packet sent by the audio encoding apparatus is data packet 1, whose identifier is 000, the second data packet is data packet 2, whose identifier is 001, the third data packet is data packet 3, whose identifier is 010, and so on.

The audio decoding apparatus may determine, according to identifiers of received data packets, whether packet loss occurs, for example, if the identifier of the first data packet received by the audio decoding apparatus is 000, and the identifier of the second data packet is 010, the audio decoding apparatus may determine packet loss occurs and that the lost data packet is data packet 2.

In addition to the above case that one packet is lost, the case that two or more packets are lost consecutively also exists in an actual system. It is understandable that in the actual application, the audio decoding apparatus may use other manners in addition to the above manner to determine whether packet loss occurs and the specific lost data packet, and the specific manner is not limited here.

In this embodiment, a packetization rule used by the audio encoding apparatus may be preset in the audio encoding apparatus and audio decoding apparatus. Therefore, after the audio decoding apparatus determines the lost data packet, the audio decoding apparatus may query for the lost audio frame corresponding to the lost data packet, where the lost audio frame is an audio frame that has lost a part of audio data.

1103. Determine whether the received data packets include the remaining audio data of the lost audio frame; and if so, execute step 1105, or if not, execute step 1104.

After determining the lost audio frame, the audio decoding apparatus may determine whether the received data packets include the remaining audio data of the lost audio frame.

### 1104. Continue to receive data packets.

If the audio decoding apparatus determines that the received data packets do not include the remaining audio data of the lost audio frame, the audio decoding apparatus may continue to receive data packets.

1105. According to correlation between the channels, use the remaining audio data of the lost audio frame to recover the lost audio data of the lost audio frame.

If the audio decoding apparatus determines that the received data packets include the remaining audio data of the lost audio frame, or the audio decoding apparatus obtains the remaining audio data of the lost audio frame in the process of continuing to receive data packets in step 1104, the audio decoding apparatus may use, according to the correlation between the channels, the remaining audio data to recover the lost audio data in the lost audio frame.

It should be noted that multiple channels in the N-channel system aim to reach the effect of surround sound. Therefore, different channels in a same audio frame have strong correlation, that is, different audio data in a same audio frame is relatively similar, and the difference generally lies in the distance between a speaker corresponding to a channel and the position of the audience.

In this embodiment, the remaining audio data may be used in multiple manners to recover the lost audio data in the lost audio frame, for example:
The audio decoding apparatus may determine whether correlation exists between the channel corresponding to the lost audio data and the channel corresponding to the audio data that is not lost.

It should be noted that when different channels are used to indicate a same sound source, correlation exists between the channels; if sound sources indicated by different channels are completely different, correlation does not exist between the channels.

In this embodiment, if correlation exists between several channels, it indicates that the audio data of the channels is the same or relatively similar in terms of signal characteristics, where the signal characteristics may be characteristics such as a pitch period, frequency, and pitch of audio data.

If correlation does not exist between the channel corresponding to the lost audio data and the channel corresponding to the audio data that is not lost, the audio decoding apparatus may use a preset recovery algorithm to perform intra-channel packet loss concealment on the lost audio data. The specific process is similar to a conventional recovery process, for example, the audio data in the adjacent audio frames is used to recover the audio data in the lost audio frame, and details are omitted here.

If correlation exists between the channel corresponding to the lost audio data and the channel corresponding to the audio data that is not lost, when recovering the lost audio data, the audio decoding apparatus may refer to the signal characteristic of audio data that is not lost, that is, use the signal characteristic of audio data that is not lost to recover the lost audio data.

The specific recovery process may be:
Assuming channel 3 is a channel corresponding to the lost audio data, the audio decoding apparatus may obtain, from channel 3, the signal characteristic of recently successfully received audio data before the current audio frame, and perform a time weighting operation according to the signal characteristic to obtain an intra-channel time compensation parameter.

For example, the audio decoding apparatus determines that the current audio frame of channel 3 is audio frame 3, and the audio decoding apparatus has received audio data of channel 3 in audio frame 1, where the signal pitch period of the audio data is 100 Hz, and the length of each audio frame is 30 ms. Therefore, the intra-channel time compensation parameter may be calculated as "a * 30/(30 + 30 + 30) * 100", where a is a time weighting coefficient, which is related to parameters such as the signal pitch period and length of the audio frame.

The time compensation parameter indicates compensation in the signal pitch period for the lost audio data in the channel.

It should be noted that this embodiment only uses an example to describe the process of calculating an intra-channel time compensation parameter according to a preset algorithm. It is understandable that in the actual application, more manners may be used to calculate the intra-channel time compensation parameter, which is a common sense for those skilled in the art and is not limited here.

After the time compensation parameter is obtained by calculation, the audio decoding apparatus may use the signal characteristic of audio data that is not lost to correct the time compensation parameter to obtain an integrated compensation parameter, for example:
Integrated compensation parameter = signal characteristic of the audio data that is not lost * space weighting coefficient b * time compensation parameter.

The space weighting coefficient b is related to the correlation degree between channels. It should be noted that in the actual application, the audio decoding apparatus may further use the signal characteristic of the audio data that is not lost in other manners to correct the time compensation parameter, which is not limited here.

In this embodiment, the signal characteristic of the audio data that is not lost may be used to correct the time compensation parameter. It is understandable that the audio decoding apparatus may also directly perform intra-channel and inter-channel weighting operations to obtain the integrated compensation parameter. For example, assuming that the signal pitch period of the audio data that is not lost is 150 Hz, the integrated compensation parameter may be: x * (a * 30/(30 + 30 + 30) * 100) + y * (b * 150).

x is a time compensation weight, and y is a space compensation weight. Assuming x = 0.3, y = 0.7, a = 0.5, and b = 0.1, the integrated compensation parameter is 16.7 + 10.5 = 27.2. After obtaining the integrated compensation parameter by calculation, the audio decoding apparatus may recover the lost audio data according to the integrated compensation parameter. For example, if the integrated compensation parameter is 27.2, and the signal pitch period of the audio data recently received on channel 3 is 100 Hz, and the signal pitch period of audio data that is not lost on channel 2 is 150 Hz, the audio decoding apparatus may determine that the signal pitch period of lost audio data of channel 3 is 27.2 + ((100 + 150)/2) = 152.2 Hz. Therefore, the lost audio data of channel 3 is recovered according to the signal characteristic obtained by calculation.

It should be noted that this embodiment only uses one example to describe the process of recovering the lost audio data according to the integrated compensation parameter. It is understandable that in the actual application, there may be more manners for recovering the lost audio data according to the integrated compensation parameter, for example:
The audio decoding apparatus may determine a space compensation coefficient according to the distance between the speaker corresponding to the channel and the position of the audience, and then use the space compensation coefficient and compensation weight to adjust the remaining audio data, thus obtaining the lost audio data in the lost audio frame.

In this embodiment, the data packet obtained by the audio encoding apparatus by packetization includes X*N segments of audio data. Because in the X*N segments of audio data, at least X+1 segments of audio data belong to different audio frames, if one data packet is lost in the data packet transmission process, audio data of at least two audio frames in the data packet is not completely lost. Even if the audio data changes greatly in different audio frames, the audio decoding apparatus may recover audio data according to the remaining audio data in the lost audio frame. Because strong correlation exists between audio data in a same audio frame, a good effect may be achieved when the audio decoding apparatus recovers the audio data, and thereby the anti-packet-loss performance in the audio data transmission process is improved.

For ease of understanding, the following uses examples in the actual application to describe the packetization process of the audio encoding apparatus and the decoding result of the audio decoding apparatus:

### 1. Packetizing 2-channel adjacent audio frames, one frame per packet:

As shown in FIG. 12 (a), this embodiment is applicable to a 2-channel system, where the audio data of the left channel is Li and the audio data of the right channel is Ri.

In this embodiment, four audio frames are used as examples for description. It is understandable that in the actual application, there may be more audio frames, which are not specifically limited here.

The audio encoding apparatus packetizes left-channel audio data L1 of the first audio frame and right-channel audio data R2 of the second audio frame into data packet 1, and packetizes left-channel audio data L2 of the second audio frame and right-channel audio data R1 of the first audio frame into data packet 2. Similarly, the audio encoding apparatus packetizes L3 and R4 into data packet 3, and packetizes R3 and L4 into data packet 4.

In this embodiment, each data packet includes two segments of audio data, and each audio frame also includes two segments of audio data, that is, the amount of audio data included in each data packet is the same as the amount of audio data included in each audio frame. This packetization manner is called "one frame per packet".

The audio encoding apparatus may allocate a unique identifier to each data packet, for example, allocate 00 to data packet 1, allocate 01 to data packet 2, allocated 10 to data packet 3, and allocate 11 to data packet 4.

After completing packetization, the audio encoding apparatus may send the data packets to the audio decoding apparatus. Assuming that data packet 3 is lost in the sending process, the identifier of the first data packet received by the audio decoding apparatus is 00, the identifier of the second data packet is 01, and the identifier of the third data packet is 11. Therefore, the audio decoding apparatus determines that data packet 3 is lost.

The audio data obtained by the audio decoding apparatus by decoding is shown in FIG. 12 (b), where L3 and R4 are lost. The audio decoding apparatus may determine that L3 belongs to the third audio frame, obtain the remaining audio data R3 of the third audio frame, and recover L3 according to R3. Likewise, the audio decoding apparatus may also recover R4 according to L4. In this embodiment, the remaining audio data may be used in multiple manners to recover the lost audio data in the lost audio frame, for example:
The audio decoding apparatus obtains a speaker SL corresponding to the left channel and a speaker SR corresponding to the right channel, calculates the distance DL between the speaker SL and the position of the audience and the distance DS between the speaker SR and the position of the audience, determines the space compensation coefficient a according to the ratio of DL to DS or difference between the DL and the DS, and then adjusts the remaining audio data according to the space compensation coefficient a, thus obtaining the lost audio data.

For example, when R3 is used to recover L3, the ratio of DL to DS is 0.9, which indicates that the speaker corresponding to the left channel is nearer to the position of the audience. Therefore, it may be determined that the space compensation coefficient is 0.9, and the sound intensity of R3 is multiplied by 90%, and then an operation is performed with the space transmission parameter H to obtain L3.

The space transmission parameter H is related to the transmission environment in the actual application, and is not limited here.

To further improve accuracy of recovery, the audio decoding apparatus may further obtain a previous audio frame and/or next audio frame adjacent to the lost audio frame to recover the lost audio data in the lost audio frame, for example, the audio decoding apparatus may further recover R3 according to L2, R2, and L4.

It should be noted that the audio decoding apparatus may determine the time compensation parameter according to L2, R2, and L4, obtain an integrated compensation coefficient by calculation in combination with the foregoing space compensation coefficient, and adjust L2, R2, L3, and L4 according to the integrated compensation coefficient to obtain R3. The specific process is not limited here.

In this embodiment, each data packet obtained by the audio encoding apparatus by packetization includes two segments of audio data, which belong to different audio frames and belong to different channels respectively. In the actual application, the audio encoding apparatus may further use other packetization manners, so long as the two segments of audio data belong to different audio frames respectively.

For example, the audio encoding apparatus may packetize L1 and L2 into data packet 1, R2 and R1 into data packet 2, L3 and L4 into data packet 3, and R4 and R3 into data packet 4.

In this embodiment, even if any data packet is lost, audio data of an audio frame is not lost completely. Therefore, the anti-packet-loss performance in the audio data transmission process can be improved effectively.

### 2. Packetizing 2-channel non-adjacent audio frames, one frame per packet:

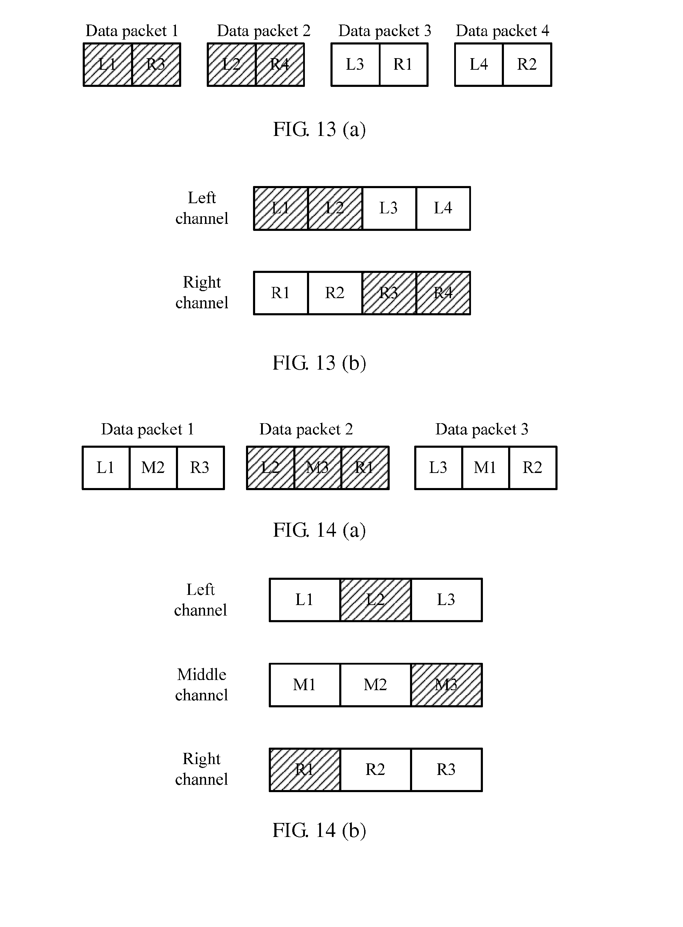

In the above solution, two segments of audio data included in each data packet belong to two adjacent audio frames, but in the actual application, may also belong to two non-adjacent audio frames, specifically as shown in FIG. 13 (a).

This embodiment is applicable to a 2-channel system, where the audio data of the left channel is Li and the audio data of the right channel is Ri.

In this embodiment, four audio frames are used as examples for description. It is understandable that in the actual application, there may be more audio frames, which are not specifically limited here.

The audio encoding apparatus packetizes left-channel audio data L1 of the first audio frame and right-channel audio data R3 of the third audio frame into data packet 1, and packetizes left-channel audio data L2 of the second audio frame and right-channel audio data R4 of the fourth audio frame into data packet 2. Similarly, the audio encoding apparatus packetizes L3 and R1 into data packet 3, and packetizes L4 and R2 into data packet 4.

In this embodiment, each data packet includes two segments of audio data, and each audio frame also includes two segments of audio data, that is, the amount of audio data included in each data packet is the same as the amount of audio data included in each audio frame. This packetization manner is called "one frame per packet".

The audio encoding apparatus may allocate a unique identifier to each data packet, for example, allocate 00 to data packet 1, allocate 01 to data packet 2, allocated 10 to data packet 3, and allocate 11 to data packet 4.

After completing packetization, the audio encoding apparatus may send the data packets to the audio decoding apparatus. Assuming that data packets 1 and 2 are lost in the sending process, the identifier of the first data packet received by the audio decoding apparatus is 10, and the identifier of the second data packet is 11. Therefore, the audio decoding apparatus determines that data packets 1 and 2 are lost.

The audio data obtained by the audio decoding apparatus by decoding is shown in FIG. 13 (b), where L1, L2, R3, and R4 are lost. The audio decoding apparatus may determine that L1 belongs to the first audio frame, obtain the remaining audio data R1 of the first audio frame, and recover L1 according to R1. Likewise, the audio decoding apparatus may also recover L2 according to R2, recover R3 according to L3, and recover R4 according to L4.

To further improve accuracy of recovery, the audio decoding apparatus may further obtain a previous audio frame and/or next audio frame adjacent to the lost audio frame to recover the lost audio data in the lost audio frame, for example, the audio decoding apparatus may further recover R3 according to R2 and L4.

The specific data recovery manner in this embodiment is similar to the data recovery manner described in the foregoing embodiment, and is not further described here.

In this embodiment, each data packet obtained by the audio encoding apparatus by packetization includes two segments of audio data, which belong to different audio frames and belong to different channels respectively. In the actual application, the audio encoding apparatus may further use other packetization manners, so long as the two segments of audio data belong to different audio frames respectively.

For example, the audio encoding apparatus may packetize L1 and L3 into data packet 1, R3 and R1 into data packet 2, L2 and L4 into data packet 3, and R4 and R2 into data packet 4.

Or, the audio encoding apparatus may packetize L1 and L4 into data packet 1, R3 and R1 into data packet 2, R4 and L2 into data packet 3, and L3 and R2 into data packet 4.

As seen from FIG. 13 (b), when two data packets are lost consecutively, the audio decoding apparatus may still obtain a segment of audio data in each audio frame after decoding, but if according to the packetization manner shown in FIG. 12 (a), data packet 1 and data packet 2 are lost simultaneously, the audio data of the first audio frame and the second audio frame may be completely lost. Therefore, the packetization manner in this embodiment may achieve better anti-packet-loss performance.

### 3. Packetizing 3-channel adjacent audio frames, one frame per packet:

As shown in FIG. 14 (a), this embodiment is applicable to a 3-channel system, where the audio data of the left channel is Li, the audio data of the middle channel is Mi, and the audio data of the right channel is Ri.

In this embodiment, three audio frames are used as examples for description. It is understandable that in the actual application, there may be more audio frames, which are not specifically limited here.

The audio encoding apparatus packetizes audio data L1 of the left channel of the first audio frame, data M2 of the middle channel of the second audio frame, and audio data R3 of the right channel of the third audio frame into data packet 1. Similarly, the audio encoding apparatus packetizes L2, M3, and R1 into data packet 2, and L3, M1, and R2 into data packet 3.

In this embodiment, each data packet includes three segments of audio data, and each audio frame also includes three segments of audio data, that is, the amount of audio data included in each data packet is the same as the amount of audio data included in each audio frame. This packetization manner is called "one frame per packet".

The process of allocating identifiers to data packets and the process of determining the lost data packet by the audio decoding apparatus according to identifiers of data packets are similar to the processes described in the foregoing embodiment, and are not further described here.

In this embodiment, assuming that data packet 2 is lost, the audio data decoded by the audio decoding apparatus is shown in FIG. 14 (b), where L2, M3, and R1 are lost. Because the remaining audio data may be obtained from each audio frame, the audio decoding apparatus may recover the lost audio data according to the remaining audio data or further in combination with the audio data of previous and next frames. The specific recovery process is similar to the process described in the foregoing embodiment, and is not further described here.

In this embodiment, even if any data packet is lost, audio data of an audio frame is not lost completely. Therefore, the anti-packet-loss performance in the audio data transmission process can be improved effectively.

### 4. Packetizing 3-channel non-adjacent audio frames, one frame per packet:

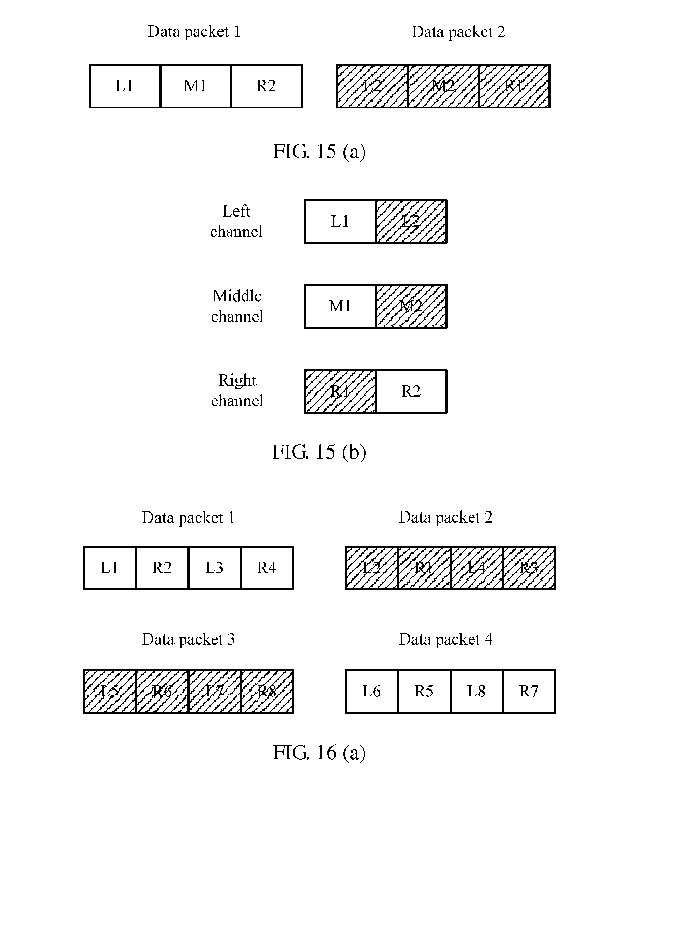

As shown in FIG. 15 (a), this embodiment is applicable to a 3-channel system, where the audio data of the left channel is Li, the audio data of the middle channel is Mi, and the audio data of the right channel is Ri.

In this embodiment, three audio frames are used as examples for description. It is understandable that in the actual application, there may be more audio frames, which are not specifically limited here.

The audio encoding apparatus packetizes L1, M1, and R2 into data packet 1, and L2, M2, and R1 into data packet 2.

In this embodiment, each data packet includes three segments of audio data, and each audio frame also includes three segments of audio data, that is, the amount of audio data included in each data packet is the same as the amount of audio data included in each audio frame. This packetization manner is called "one frame per packet".

The process of allocating identifiers to data packets and the process of determining the lost data packet by the audio decoding apparatus according to identifiers of data packets are similar to the processes described in the foregoing embodiment, and are not further described here.

In this embodiment, assuming that data packet 2 is lost, the audio data decoded by the audio decoding apparatus is shown in FIG. 15 (b), where L2, M2, and R1 are lost. Because the remaining audio data can be obtained from each audio frame, the audio decoding apparatus may recover the lost audio data according to the remaining audio data or further in combination with the audio data of the previous and next frames. The specific recovery process is similar to the process described in the foregoing embodiment, and is not further described here.

In this embodiment, data packet 1 includes three segments of audio data, where L1 and M1 belong to the first audio frame, and R2 belongs to the second audio frame. Data packet 2 includes three segments of audio data, where L2 and M2 belong to the second audio frame, and R1 belongs to the first audio frame. The packetization manner has the least change as compared with the packetization manner in the prior art. Therefore, the processing complexity of the audio encoding apparatus is relatively low, but it can still be ensured that audio data of an audio frame is not completely lost when any data packet is lost. Therefore, the anti-packet-loss performance in the audio data transmission process can be effectively improved.

The packetization manners shown in FIG. 14 (a) and FIG. 15 (a) may be selected for use in the actual application according to specific situations. The packetization manner shown in FIG. 14 (a) has great change as compared with the packetization manner in the prior art. Therefore, processing complexity of the audio encoding apparatus is relatively high, but when any data packet is lost, the audio decoding apparatus may use two pieces of the remaining audio data in each audio frame to recover the lost audio data. Even if two data packets are lost consecutively, the audio decoding apparatus may also use one piece of the remaining audio data in each audio frame to recover the lost audio data, and therefore the anti-packet-loss performance is good.

The packetization manner shown in FIG. 15 (a) cannot resist the situation where two data packets are lost consecutively, and when any data packet is lost, the audio decoding apparatus may use only one piece of the remaining audio data in each audio frame to recover the lost audio data, and therefore processing complexity of the audio decoding apparatus is slightly high. However, the packetization manner has the least change as compared with the packetization manner in the prior art, and therefore processing complexity of the audio encoding apparatus is low.

In the above examples, the packetization manner of "one frame per packet" is used for description. In the actual application, the packetization manner of "multiple frames per packet" may be used, and is described hereinafter.

### 5. Packetizing multiple frames per packet:

As shown in FIG. 16 (a), this embodiment is applicable to a 2-channel system, where the audio data of the left channel is Li and the audio data of the right channel is Ri.

In this embodiment, eight audio frames are used as examples for description. It is understandable that in the actual application, there may be more audio frames, which are not specifically limited here.

The audio encoding apparatus packetizes L1, R2, L3, and R4 into data packet 1, L2, R1, L4, and R3 into data packet 2, L5, R6, L7, and R8 into data packet 3, and L6, R5, L8, and R7 into data packet 4.

In this embodiment, each data packet includes four segments of audio data, and each audio frame includes two segments of audio data, that is, the amount of audio data included in each data packet is twice the amount of audio data included in each audio frame. This packetization manner is called "two frames per packet".

The process of allocating identifiers to data packets and the process of determining the lost data packet by the audio decoding apparatus according to identifiers of data packets are similar to the processes described in the foregoing embodiment, and are not further described here.

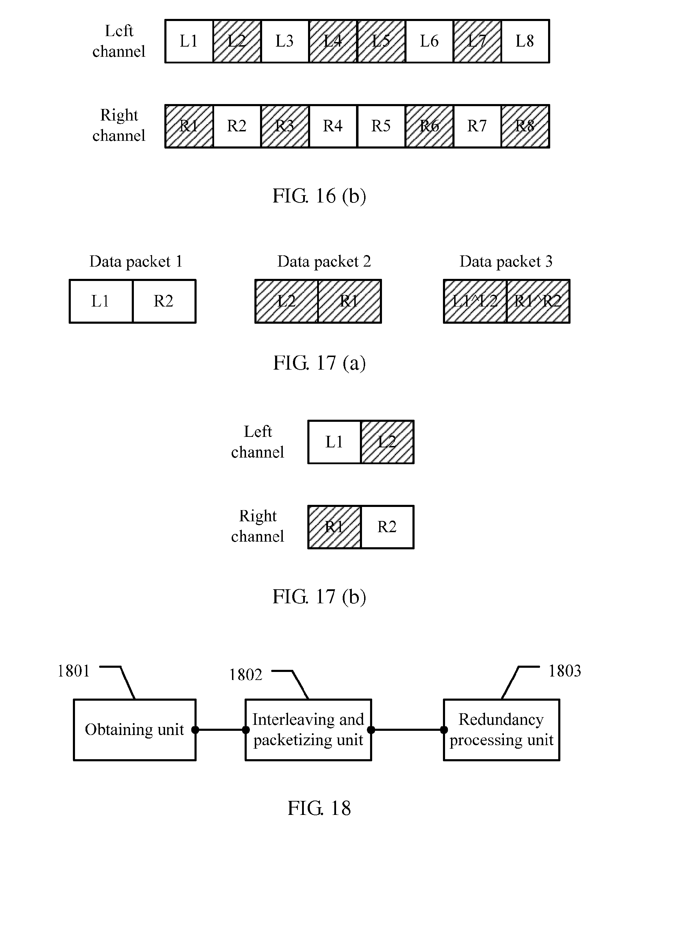

In this embodiment, assuming that data packets 2 and 3 are lost, the audio data decoded by the audio decoding apparatus is shown in FIG. 16 (b), where R1, L2, R3, L4, L5, R6, L7, and R8 are lost. Because remaining audio data can be obtained from each audio frame, the audio decoding apparatus may recover the lost audio data according to the remaining audio data or further in combination with the audio data of the previous and next frames. The specific recovery process is similar to the process described in the foregoing embodiment, and is not further described here.

In this embodiment, the amount of audio data included in each data packet is twice the amount of audio data included in each audio frame. It is understandable that the processing manner in this embodiment may be equivalent to the manner, as shown in FIG. 12 (a), of packetizing data packet 1 and data packet 3 into a new data packet and packetizing data packet 2 and data packet 4 into a new data packet.

### 6. Packetizing by forward error correction (FEC, Forward Error Correction):

As shown in FIG. 17 (a), this embodiment is applicable to a 2-channel system, where the audio data of the left channel is Li and the audio data of the right channel is Ri.

In this embodiment, two audio frames are used as examples for description. It is understandable that in the actual application, there may be more audio frames, which are not specifically limited here.

The audio encoding apparatus packetizes L1 and R2 into data packet 1, L2 and R1 into data packet 2, and L1^L2 and R1^R2 into a redundancy packet.

L1^L2 is an exclusive-OR operation result of L1 and L2, and R1^R2 is an exclusive-OR operation result of R1 and R2. L1^L2 may be used to recover L1 and L2, and R1^R2 may be used to recover R1 and R2.

The process of allocating identifiers to data packets and the process of determining the lost data packet by the audio decoding apparatus according to identifiers of data packets are similar to the processes described in the foregoing embodiment, and are not further described here.

In this embodiment, assuming that data packet 2 and the redundancy packet are lost, the audio data decoded by the audio decoding apparatus is shown in FIG. 17 (b), where R1 and L2 are lost. Because the remaining audio data can be obtained from each audio frame, the audio decoding apparatus may recover the lost audio data according to the remaining audio data or further in combination with the audio data of the previous and next frames. The specific recovery process is similar to the process described in the foregoing embodiment, and is not further described here.

In this embodiment, if data packets 1 and 2 are lost, the audio decoding apparatus may recover L1 and L2 according to L1^L2 in the redundancy packet, and recover R1 and R2 according to R1^R2 in the redundancy packet.

The audio encoding process and decoding process according to the present invention are described in the above examples. It is understandable that in the actual application, the number of channels, the number of audio frames, and the packetization manners may be changed, and are not limited here.

The following describes an embodiment of an audio encoding apparatus according to the present invention. As shown in FIG. 18, the audio encoding apparatus according to the present invention is applicable to an audio encoding/decoding system, where the audio encoding/decoding system includes N channels, where N is an integer greater than or equal to 2. An embodiment of the audio encoding apparatus according to the present invention includes:
an obtaining unit 1801, configured to obtain audio data of the N channels; and
an interleaving and packetizing unit 1802, configured to perform channel interleaving and packetization on the audio data of the N channels obtained by the obtaining unit 1801 to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames.

The audio encoding apparatus in this embodiment may further include:
a redundancy processing unit 1203, configured to perform a pairwise exclusive-OR operation on audio data in at least two data packets to obtain a redundancy packet.

The interleaving and packetizing unit 1202 in this embodiment may use multiple manners to perform channel interleaving and packetization on the obtained audio data of the N channels in the actual application to obtain data packets.

The following describes in detail the audio encoding apparatus of this embodiment in combination with specific application scenarios:

### (1) Only two segments of audio data belong to different audio frames:

In this embodiment, before the audio encoding apparatus performs audio encoding, the obtaining unit 1201 in the audio encoding apparatus may obtain audio data of N channels from a collecting device or other audio devices.

The specific description of the audio data of the N channels is similar to the content described in step 301 in the embodiment shown in FIG. 3, and details are omitted here.

In this embodiment, the number of channels is N. The interleaving and packetizing unit 1802 may compose a data packet by using audio data of the mth channel in the hth audio frame and audio data of other N-m channels than the mth channel in the ith audio frame.

The data packet obtained by the interleaving and packetizing unit 1802 includes N segments of audio data, where one segment of audio data is audio data of the mth channel in the hth audio frame, and the remaining audio data is audio data in the ith audio frame. Therefore, in the data packet, two segments of audio data belong to different audio frames.

In addition, the interleaving and packetizing unit 1802 may compose a data packet by using audio data of the mth channel in the ith audio frame and audio data of other N-m channels than the mth channel in the hth audio frame.

The data packet obtained by the interleaving and packetizing unit 1802 includes N segments of audio data, where one segment of audio data is audio data of the mth channel in the ith audio frame, and the remaining audio data is audio data in the hth audio frame. Therefore, in the data packet, two segments of audio data belong to different audio frames.

It should be noted that the above two packetization processes performed by the interleaving and packetizing unit 1802 may be executed in any sequence.

Here only two audio frames are used as examples for description. It is understandable that in the actual application, there may be more audio frames. The packetization process of more audio frames by the interleaving and packetizing unit 1802 is similar to the packetization process of two audio frames by the interleaving and packetizing unit, and is not further described here.

### (2) Any two segments of audio data belong to different audio frames:

In this embodiment, before the audio encoding apparatus performs audio encoding, the obtaining unit 1801 in the audio encoding apparatus may obtain audio data of N channels from a collecting device or other audio devices.

The specific description of the audio data of the N channels is similar to the content described in step 301 in the embodiment shown in FIG. 3, and details are omitted here.

In this embodiment, the number of channels is N. The interleaving and packetizing unit 1802 may perform channel interleaving and packetization on audio data in N time-adjacent audio frames, so that each data packet obtained by packetization includes N segments of audio data, and that in the N segments of audio data, any two segments of audio data belong to different audio frames.

In the actual application, the interleaving and packetizing unit 1802 may use an alternate packetization manner, for example, first determine the number N of channels, and then for each audio frame, place the N segments of audio data in the audio frame into N data packets respectively. Therefore, the audio data in the N audio frames may be just placed in the N data packets. Thereby, in N segments of audio data of each data packet, any two segments of audio data belong to different audio frames.

In this embodiment, the processing manner of the interleaving and packetizing unit 1802 for the 2-channel system and the 3-channel system may be similar to the content described in step 502 in the embodiment shown in FIG. 5, and is not further described here.

In the actual application, in addition to the 2-channel system and the 3-channel system, there are systems having more channels. The specific processing manner of the interleaving and packetizing unit 1802 of systems having more channels is similar to the specific processing manner of the interleaving and packetizing unit of the 2-channel system and the 3-channel system, and is not further described here.

After the interleaving and packetizing unit 1802 obtains data packets by packetization, the redundancy processing unit 1803 may further perform a pairwise exclusive-OR operation on audio data in at least two data packets to obtain a redundancy packet.

In the embodiment of the present invention, the data packet obtained by the interleaving and packetizing unit 1802 by packetization includes X*N segments of audio data. Because in the X*N segments of audio data, at least X+1 segments of audio data belong to different audio frames, if one data packet is lost in the data packet transmission process, audio data of at least two audio frames in the data packet is not completely lost. Even if the audio data changes greatly in different audio frames, the audio decoding apparatus may recover audio data according to the remaining audio data in the lost audio frame. Because strong correlation exists between audio data in a same audio frame, a good effect can be achieved when the audio decoding apparatus recovers the audio data, and thereby the anti-packet-loss performance in the audio data transmission process is improved.

In addition, the redundancy processing unit 1803 may perform a pairwise exclusive-OR operation on audio data in at least two data packets to obtain a redundancy packet, which better helps the audio decoding apparatus to recover audio data, thus further improving the anti-packet-loss performance in the audio data transmission process.

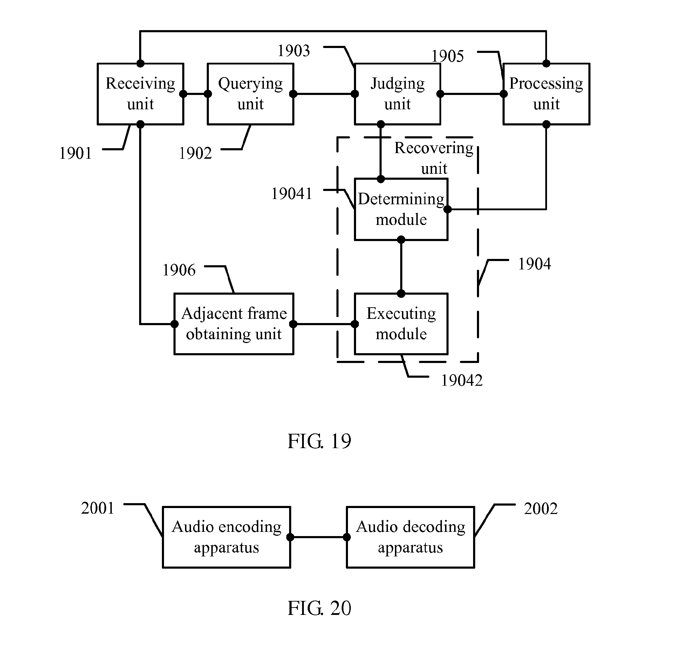

The following describes an embodiment of an audio decoding apparatus according to the present invention. As shown in FIG. 19, the audio decoding apparatus according to the present invention is applicable to an audio encoding/decoding system, where the audio encoding/decoding system includes N channels, where N is an integer greater than or equal to 2. An embodiment of the audio decoding apparatus according to the present invention includes:
a receiving unit 1901, configured to receive data packets from an audio encoding apparatus;
a querying unit 1902, configured to: when a data packet is lost, query for a lost audio frame corresponding to the lost data packet, where the lost audio frame is an audio frame that has lost a part of audio data;
a judging unit 1903, configured to: determine whether the data packets received by the receiving unit 1901 include the remaining audio data of the lost audio frame which the querying unit 1902 queries for, and if so, trigger a recovering unit 1904 to perform a corresponding operation, or if not, trigger a processing unit 1905 to perform a corresponding operation;
the recovering unit 1904, configured to use, according to the triggering of the judging unit 1903, the remaining audio data of the lost audio frame to recover the audio data of the lost audio frame; and
the processing unit 1905, configured to trigger, according to the trigger of the judging unit 1903, the receiving unit 1901 to continue to receive data packets, and when the remaining audio data of the lost audio frame is obtained, trigger the recovering unit 1904 to perform a corresponding operation.

The recovering unit 1904 in this embodiment may further include:
a determining module 19041, configured to determine a channel corresponding to the lost audio data in the lost audio frame and a channel corresponding to the remaining audio data of the lost audio frame; and
an executing module 19042, configured to recover the lost audio data of the lost audio frame according to correlation between the channels.

The audio decoding apparatus in this embodiment may further include:
an adjacent frame obtaining unit 1906, configured to obtain a previous audio frame and/or next audio frame time-adjacent to the lost audio frame; where
the recovering unit 1904 in this embodiment may be specifically configured to use the previous audio frame and/or next audio frame adjacent to the lost audio frame, and the remaining audio data of the lost audio frame to recover the audio data of the lost audio frame.

For ease of understanding, the following describes in detail the audio decoding apparatus in this embodiment by using a specific application scenario.

After the audio encoding apparatus completes encoding, data packets are sent to the audio decoding apparatus, and the receiving unit 1901 may receive data packets from the audio encoding apparatus.

Because data packets are usually sent through UDP and UDP provides a simple and unreliable transaction-oriented information transfer service, packet loss is unavoidable in the transmission process.

Each data packet has its corresponding unique identifier. The audio decoding apparatus may determine, according to identifiers of the received data packets, whether packet loss occurs. The process of determining whether packet loss occurs by the audio decoding apparatus is similar to the process described in the embodiment shown in FIG. 4, and is not further described here. After the audio decoding apparatus determines the lost audio frame, the judging unit 1903 may determine whether the received data packets include the remaining audio data of the lost audio frame.

If the judging unit 1903 determines that the received data packets do not include the remaining audio data of the lost audio frame, the judging unit 1903 may trigger the receiving unit 1901 to continue to receive data packets.

If the judging unit 1903 determines that the received data packets include the remaining audio data of the lost audio frame, or the judging unit 1903 determines that the remaining audio data of the lost audio frame is obtained in the process of continuing to receive data packets by the receiving unit 1901, the determining module 19041 in the recovering unit 1904 may determine the channel corresponding to the lost audio data in the lost audio frame, and the channel corresponding to the remaining audio data of the lost audio frame. Then the executing module 19042 may recover the lost audio data in the lost audio frame according to the correlation between the channels.

In this embodiment, the specific process of recovering audio data by the executing module 19042 is similar to the process described in step 1105 in the embodiment shown in FIG. 11, and is not further described here.

It should be noted that, to further improve accuracy of recovering audio data, the adjacent frame obtaining unit 1906 may further obtain a previous audio frame and/or next audio frame adjacent to the lost audio frame. Therefore, the recovering unit 1904 may use the previous audio frame and/or next audio frame, and the remaining audio data of the lost audio frame to recover the lost audio data in the lost audio frame.

In this embodiment, the data packet obtained by the audio encoding apparatus by packetization includes X*N segments of audio data. Because in the X*N segments of audio data, at least X+1 segments of audio data belong to different audio frames, if one data packet is lost in the data packet transmission process, audio data of at least two audio frames in the data packet is not completely lost. Even if the audio data changes greatly in different audio frames, the recovering unit 1904 may recover audio data according to the remaining audio data in the lost audio frame. Because strong correlation exists between audio data in a same audio frame, a good effect can be achieved when the recovering unit 1904 recovers the audio data, and thereby the anti-packet-loss performance in the audio data transmission process is improved.

The following describes an embodiment of an audio decoding apparatus. As shown in FIG. 20, the encoding/decoding system according to the present invention includes N channels, where N is an integer greater than or equal to 2. An embodiment of the encoding/decoding system according to the present invention includes:
an audio encoding apparatus 2001, configured to: obtain audio data of the N channels; perform channel interleaving and packetization on the obtained audio data of the N channels to obtain data packets, where each data packet includes X*N segments of audio data, where X is a ratio of an amount of audio data included in one data packet to an amount of audio data included in one audio frame, X is an integer greater than or equal to 1, and in the X*N segments of audio data, at least X+1 segments of audio data belong to different audio frames; and send the data packets; and
an audio decoding apparatus 2002, configured to: receive data packets; when a data packet is lost, query for a lost audio frame corresponding to the lost data packet, where the lost audio frame is an audio frame that has lost a part of audio data; determine whether the received data packets include the remaining audio data of the lost audio frame; and if so, use the remaining audio data of the lost audio frame to recover the audio data of the lost audio frame; or if not, continue to receive data packets, and when the remaining audio data of the lost audio frame is obtained, use the remaining audio data of the lost audio frame to recover the audio data of the lost audio frame.

It should be noted that the audio encoding apparatus 2001 in this embodiment may be similar to the audio encoding apparatus described in the embodiment shown in FIG. 18. The audio decoding apparatus 2002 in this embodiment may be similar to the audio decoding apparatus described in the embodiment shown in FIG. 19. The two apparatuses are not further described here.

Persons of ordinary skill in the art may understand that all or a part of the steps of the methods in the embodiments may be implemented by a program instructing relevant hardware. The program may be stored in a computer readable storage medium, such as a read-only memory, a magnetic disk, or an optical disk.

The above is a detail introduction to an audio encoding method and apparatus, an audio decoding method and apparatus, and an encoding/decoding system provided by the present invention. With respect to the implementation and applicability of the present invention, modifications and variations may be made by persons of ordinary skill in the art according to the idea of the embodiments of the present invention. Therefore, the specification shall not be construed as a limitation on the present invention.

## Claims

1. An audio encoding method, applicable to an audio encoding system comprising N channels, wherein N is an integer greater than or equal to 2, wherein the method comprises:
obtaining audio data of the N channels; and
performing channel interleaving and packetization on the obtained audio data of the N channels to obtain data packets, wherein each data packet comprises X*N segments of audio data, wherein X is a ratio of an amount of audio data comprised in one data packet to an amount of audio data comprised in one audio frame, and X is an integer greater than or equal to 1;
wherein, in the X*N segments of audio data, at least X+1 segments of audio data belong to different audio frames.

2. The method according to claim 1, wherein the performing channel interleaving and packetization on the obtained audio data of the N channels to obtain data packets comprises:
composing a data packet by using audio data of an m^{th} channel in an i^{th} audio frame and audio data of other channels than an m^{th} channel in an i^{th} audio frame; and
composing another data packet by using audio data of the m^{th} channel in the i^{th} audio frame and audio data of other channels than the m^{th} channel in the h^{th} audio frame;
wherein, h and i are different audio frame numbers, and m is any integer from 1 to N.

3. The method according to claim 2, wherein:
the h^{th} audio frame and the i^{th} audio frame are time-adjacent audio frames.

4. The method according to claim 1, wherein the performing channel interleaving and packetization on the obtained audio data of the N channels to obtain data packets comprises:
performing channel interleaving and packetization on audio data in N time-adjacent audio frames to obtain N data packets, wherein each data packet comprises N segments of audio data, and in the N segments of audio data, any two segments of audio data belong to different audio frames.

5. The method according to claim 4, wherein if N is 2, the performing channel interleaving and packetization on audio data in N time-adjacent audio frames to obtain N data packets comprises:
composing a data packet by using audio data Lⱼ of a left channel in a j^{th} audio frame and audio data Rⱼ₊₁ of a right channel in a (j+1)^{th} audio frame; and
composing another data packet by using audio data Lⱼ₊₁ of a left channel in the (j+1)^{th} audio frame and audio data Rⱼ of a right channel in the j^{th} audio frame;
wherein, j is an audio frame number.

6. The method according to claim 4, wherein if N is 3, the performing channel interleaving and packetization on audio data in N time-adjacent audio frames to obtain N data packets comprises:
composing a data packet by using audio data Lₖ of a left channel in a k^{th} audio frame, audio data Mₖ₊₁ of a middle channel in a (k+1)^{th} audio frame, and audio data Rₖ₊₂ of a right channel in a (k+2)^{th} audio frame;
composing another data packet by using audio data Lₖ₊₁ of a left channel in the (k+1)^{th} audio frame, audio data Mₖ₊₂ of a middle channel in the (k+2)^{th} audio frame, and audio data Rₖ of a right channel in the k^{th} audio frame; and
composing still another data packet by using audio data Lₖ₊₂ of a left channel in the (k+2)^{th} audio frame, audio data Mₖ of a middle channel in the k^{th} audio frame, and audio data Rₖ₊₁ of a right channel in the (k+1)^{th} audio frame.

7. The method according to any one of claims 1 to 6, wherein after performing channel interleaving and packetization on the obtained audio data of the N channels to obtain data packets, the method comprises:
performing a pairwise exclusive-OR operation on audio data in at least two data packets to obtain a redundancy packet.

8. An audio decoding method, applicable to an audio encoding system comprising N channels, wherein N is an integer greater than or equal to 2, wherein the method comprises:
receiving data packets;
when loss of a data packet is detected, querying for a lost audio frame corresponding to the lost data packet, wherein the lost audio frame is an audio frame that has lost a part of audio data;
determining whether the received data packets comprise the remaining audio data of the lost audio frame; and
if so, using the remaining audio data of the lost audio frame to recover the audio data of the lost audio frame; or
if not, continuing to receive data packets, and when the remaining audio data of the lost audio frame is obtained, using the remaining audio data of the lost audio frame to recover the audio data of the lost audio frame.

9. The method according to claim 8, wherein the using the remaining audio data of the lost audio frame to recover the audio data of the lost audio frame comprises:
determining a channel corresponding to the lost audio data in the lost audio frame and a channel corresponding to the remaining audio data of the lost audio frame; and
according to correlation between channels, using the remaining audio data of the lost audio frame to recover the lost audio data of the lost audio frame.

10. The method according to claim 8, wherein the method further comprises:
obtaining a previous audio frame and/or next audio frame time-adjacent to the lost audio frame; and
the using the remaining audio data of the lost audio frame to recover the audio data of the lost audio frame comprises:
using the previous audio frame and/or next audio frame adjacent to the lost audio frame and the remaining audio data of the lost audio frame to recover the audio data of the lost audio frame.

11. An audio encoding apparatus for encoding audio data of N channels, wherein N is an integer greater than or equal to 2, wherein the audio encoding apparatus comprises:
an obtaining unit, configured to obtain audio data of the N channels; and
an interleaving and packetizing unit, configured to perform channel interleaving and packetization on the audio data of the N channels obtained by the obtaining unit to obtain data packets, wherein each data packet comprises X*N segments of audio data, wherein X is a ratio of an amount of audio data comprised in one data packet to an amount of audio data comprised in one audio frame, X is an integer greater than or equal to 1, and in the X*N segments of audio data, at least X+1 segments of audio data belong to different audio frames.

12. The audio encoding apparatus according to claim 11, wherein:
the interleaving and packetizing unit is specifically configured to compose a data packet by using audio data of an m^{th} channel in an h^{th} audio frame and audio data of other channels than an m^{th} channel in an i^{th} audio frame, and compose another data packet by using audio data of the m^{th} channel in the i^{th} audio frame and audio data of other channels than the m^{th} channel in the h^{th} audio frame;
wherein, h and i are different audio frame numbers, and m is any integer from 1 to N.

13. The audio encoding apparatus according to claim 11, wherein:
the interleaving and packetizing unit is specifically configured perform channel interleaving and packetization on audio data in N time-adjacent audio frames to obtain N data packets, wherein each data packet comprises N segments of audio data, and in the N segments of audio data, any two segments of audio data belong to different audio frames.

14. The audio encoding apparatus according to any one of claims 11 to 13, wherein the audio encoding apparatus further comprises:
a redundancy processing unit, configured to perform a pairwise exclusive-OR operation on audio data in at least two data packets obtained by the interleaving and packetizing unit to obtain a redundancy packet.

15. An audio decoding apparatus for decoding audio data of N channels, wherein N is an integer greater than or equal to 2, wherein the audio decoding apparatus comprises:
a receiving unit, configured to receive data packets;
a querying unit, configured to: when loss of a data packet is detected, query for a lost audio frame corresponding to the lost data packet, wherein the lost audio frame is an audio frame that has lost a part of audio data;
a judging unit, configured to: determine whether the data packets received by the receiving unit comprise the remaining audio data of the lost audio frame which the querying unit queries for, and if so, trigger a recovering unit to perform a corresponding operation, or if not, trigger a processing unit to perform a corresponding operation;
the recovering unit, configured to use, according to the trigger of the judging unit, the remaining audio data of the lost audio frame to recover the audio data of the lost audio frame; and
the processing unit, configured to trigger, according to the trigger of the judging unit, the receiving unit to continue to receive data packets, and when the remaining audio data of the lost audio frame is obtained, trigger the recovering unit to perform a corresponding operation.

16. The audio decoding apparatus according to claim 15, wherein the recovering unit comprises:
a determining module, configured to determine a channel corresponding to the lost audio data in the lost audio frame and a channel corresponding to the remaining audio data of the lost audio frame; and
an executing module, configured to use, according to correlation between channels, the remaining audio data of the lost audio frame to recover the lost audio data of the lost audio frame.

17. The audio decoding apparatus according to claim 15, further comprising:
an adjacent frame obtaining unit, configured to obtain a previous audio frame and/or next audio frame time-adjacent to the lost audio frame; wherein
the recovering unit is specifically configured to use the previous audio frame and/or next audio frame adjacent to the lost audio frame and the remaining audio data of the lost audio frame to recover the audio data of the lost audio frame.

18. An encoding/decoding system comprising N channels, wherein N is an integer greater than or equal to 2, wherein the system comprises:
an audio encoding apparatus, configured to: obtain audio data of the N channels; perform channel interleaving and packetization on the obtained audio data of the N channels to obtain data packets, wherein each data packet comprises X*N segments of audio data, wherein X is a ratio of an amount of audio data comprised in one data packet to an amount of audio data comprised in one audio frame, X is an integer greater than or equal to 1, and in the X*N segments of audio data, at least X+1 segments of audio data belong to different audio frames; and send the data packets; and
an audio decoding apparatus, configured to: receive data packets; when a data packet is lost, query for a lost audio frame corresponding to the lost data packet, wherein the lost audio frame is an audio frame that has lost a part of audio data; determine whether the received data packets comprise the remaining audio data of the lost audio frame; and if so, use the remaining audio data of the lost audio frame to recover the audio data of the lost audio frame; or if not, continue to receive data packets, and when the remaining audio data of the lost audio frame is obtained, use the remaining audio data of the lost audio frame to recover the audio data of the lost audio frame.
